# EUROPEAN PATENT SPECIFICATION

(11) **EP 3 390 543 B1**
(45) Date of publication and mention of the grant of the patent: **22.04.2020**
(21) Application number: 16806291.7
(22) Date of filing: 28.11.2016
(51) Int. Cl.: C09D 4/00, B29C 33/56, C08F 220/22

(54) **POLYELECTROLYTE FLUORINATED ACRYLIC COPOLYMERS AND RELEASE-AGENT COMPOSITIONS FOR USING IN RUBBER VULCANIZATION**
FLUORIERTE POLYELEKTROLYT-ACRYLCOPOLYMERE UND FREISETZUNGSMITTELZUSAMMENSETZUNG ZUR VERWENDUNG IN DER KAUTSCHUKVULKANISIERUNG
COPOLYMÈRES POLYÉLECTROLYTIQUES ACRYLIQUES FLUORÉS ET COMPOSITIONS D'AGENT ANTIADHÉSIF DESTINÉES À ÊTRE UTILISÉES DANS LA VULCANISATION DU CAOUTCHOUC

(30) Priority: 14.12.2015 IT UB20159527
(43) Date of publication of application: 24.10.2018
(73) Proprietor: Fondazione Istituto Italiano di Tecnologia, 16163 Genova (IT)
(72) Inventor: ATHANASIOU, Athanasia, 16163 Genova (GE) (IT); RADAELLI, Greta, 16163 Genova (GE) (IT); BAYER, Ilker, 16163 Genova (GE) (IT); HEREDIA GUERRERO, José Alejandro, 16163 Genova (GE) (IT)
(74) Representative: Lisa, Elisabetta
(86) International application number: PCT/IB2016/057164
(87) International publication number: WO 2017/103715

(56) References cited:
- CN-A- 104 972 580
- JP-A- 2013 194 229
- US-A- 5 294 662
- US-A1- 2012 309 883

## Description

### TECHNICAL FIELD

The present invention refers to the tyre industry and, specifically, to the rubber products manufacturing.

In particular, the present invention is relevant to a release-agent composition for rubber to metal bonding.

More in particularly, the present invention concerns a chemically engineered water dispersed polyelectrolyte fluorinated acrylic copolymer to produce a release-agent composition for vulcanizing natural or synthetic rubber and composites thereof.

The invention also regards a method for obtaining said polyelectrolyte fluorinated acrylic copolymer as well as a method for producing said release-agent composition.

The present invention is preferably and advantageously applied for improving the non-sticking and lubrication properties of a fluorinated acrylic copolymer water dispersion towards rubber on different materials in vulcanizing pressure and temperature conditions.

### PRIOR ART

In the tyre manufacturing industry, pneumatic rubber vehicle tyres are conventionally produced by moulding and curing an uncured and unshaped tyre in a moulding press.

According to the conventional processes, an uncured tyre is pressed outwardly against a metallic mould surface by means of an inner expandable bladder, so that the uncured tyre is shaped against the metallic mould surface defining the tyre tread pattern and the configuration of the sidewalls thereof; the tyre is moulded and cured by heating and pressuring.

After the vulcanization, the mould is opened, the bladder is collapsed by removal of its internal pressure and the tyre is removed from the metallic mould.

A remarkable problem of the conventional processes, particularly of the last abovementioned step, resides in that sticking of the rubber of the tyre onto the different surfaces contacted inside the mould occurs; the undesired adhesion obstructs the mould opening and complicates the tyre removal, this leading to defective tyres as final products and/or to undesired production breakdowns (as a matter of facts, due to the rubber sticking, the cleaning of the mould surfaces from contaminations of tyre residuals and/or the manual removal of the tyres may become necessary).

For these reasons, within the tyre manufacturing field, many solutions to the problem of adhesion (or sticking) and lubrication (or slipping), both between the metallic mould and the adjacent outer surface of tyres and between the bladder and the adjacent inner surface of tyres, have been developed.

Owing to the different properties of the involved materials, different approaches have been followed so far and, among them, the use of non-sticking polymeric coatings seems to be, at the moment, the most successful and widespread; as an example, it is conventional practice to pre-overlay the metallic mould and/or the outer surface of the uncured tyre with a release agent in order to prevent the sticking , the release-agent solution being usually introduced into the moulds and distributed therein by means of a spray gun.

Normally, water-based solutions are used as release-agent solutions, since they reduce the typical drawbacks of volatile organic solvents (i.e. explosions, fire risks, atmospheric pollution, resources and so on).

Other known release-agent solutions are silicone-based compositions, but they present the drawback of the transfer of the silicone coating from the aluminium mould to the outer surface of tyres, which can contaminate the final product and which causes the need to renew the non-sticking film after each vulcanization.

Recently, agent-release compositions containing synthetic resins, instead of the previous silicone-based compositions, have been employed on metal surfaces in order to avoid the aforesaid silicone transfer and consequences thereof; commercially available aqueous emulsions of synthetic resins, such as Release Agent MK-222 from Münch Chemie International GmbH, on the one hand overcome the drawbacks of silicone-based release agents, but on the other hand they still not reach a 100% release efficiency and, moreover, they are extremely expensive, for this reason being used only in the most critical cases, such as the vulcanization of snow tyres where the complex tread design makes extremely tricky the separation of the tyre from the mould after vulcanization.

Also known are lubricants and release agents based on fluorinated polymer dispersions, such as those disclosed in the International application published at no. WO 2014/125180 A1 and in the US Patents no. US 5,540,837 and no. US 5,738,813.

The application no. WO 2014/125180 A1 discloses the use of fluoropolymers for coating metallic surfaces suitable for receiving elastomeric materials, such as tyre rubber; the technical problem to be solved by this invention is to achieve a metallic surface having non-stick and lubricant properties in order to make easier the removing of the vulcanized tyre from the mould surface; the method disclosed in this document consists in (i) applying a layer of a first polymeric resin, said first resin comprising a water dispersion of at least 50% in mass of fluoroethylenepropylene (FEP) particles; (ii) polymerizing said first resin; (iii) cooling said first resin; (iv) applying a mixture comprising said first resin and a second resin, said second resin comprising a water dispersion of polytetrafluoroethylene (PTFE); (v) polymerizing the mixture and (vi) cooling the mixture; preliminary steps of polishing the mould metallic surface are provided and may include alkaline washing of the surface; other embodiments using perfluoroalcoxy polymers in spite of fluoroethylenepropylene are also described; according to this document, the maximum working temperature achievable is 220 °C under continuous operations and 260 °C in batch conditions, and the coating layer may reach thickness values of 3-6 µm.

The solution described in above International application, tough providing an improved non-sticking composition for rubber during vulcanization, has the disadvantages that the polymers described in this document do not comprise the fluorinated acrylic copolymers and that an alkaline solution is employed only in a preliminary cleaning step of the target surface and it is not added to the acrylic fluoropolymer dispersion in order to induce a chemical modification thereof; more precisely, in the polymers of this invention the functional groups sensitive to pH are not fully described and the addition of an alkaline solution to the composition does not reveal the aim of influencing the reactivity of said functional groups.

The patent no. US 5,540,837 discloses a method for chemically engineer a fluoropolymer in order to achieve a permanent hydrophilic modification, which is required for several applications of said polymer, especially for fluoropolymer porous membranes; this method consists in modifying the surface of the fluoropolymer film with a thin film of a charged polyelectrolyte complex, which is formed on the surface of the polymer and reoriented; in particular, a polycation and/or a polycationically modified synthetic resin is applied to the surface of the fluoropolymer and a charged polyelectrolyte complex is formed by adding a polyanion and/or anionically modified synthetic resin and then is reoriented; the fluoropolymers are preferably modified with components that impart hydrophilic properties to the surface, the result of modification of the polymer being a modified surface that is more hydrophilic and contains a greater amount of ionic groups in comparison with the starting polymer; among the preferred polyanions suggested there are Nafion® solutions and, among the preferred polycations, the polyacrylic acid is mentioned; the use of polymers or copolymers of (meth)acrylic acid dispersed in addition to the polycation are suggested; it is also reported that the reactivity of the functional groups can be influenced on the basis of the pH, and an optimum pH range between 4 and 8 is reported.

The solution described in above US patent has the disadvantage that, though reporting an acrylic fluoropolymer dispersion employed in alkaline conditions, it does not disclose the generic formula and the chemical features describing a polyelectrolyte fluorinated acrylic copolymer suitable for obtaining a release-agent composition; moreover, the chemically engineered fluoropolymer of this invention shows stability only up to 160 °C since it has not been developed for working in vulcanizing conditions; moreover, the chemical modifications suggested by this invention have been carried out in order to improve the hydrophilicity of a fluoropolymer and not for providing an improved non-sticking composition for rubber during vulcanization.

The patent no. US 5,738,813 discloses a release agent composition for tyre moulding, specifically for the application onto the inner liner of the unvulcanized green tyre wherein a bladder is placed within the tyre; the composition according to this invention comprises diorganopolysiloxane (which is an emulsifying dispersant), mica or talc powder, another powder having a melting point not exceeding 200 °C and water to disperse all the previous components; the diorganopolysiloxane component, with a viscosity of at least 100 centistokes, works as release and lubricant agent and comprises a straight, only partially branched, chain end blocked by hydroxyl groups or triorganosylil groups; mica or talc powder is added with the aim of improving lubrication properties and supporting the escape of air between the bladder and inner liner surface of the green tyre during the moulding; the further powder component, employed as a filler, should have a melting temperature below 200 °C, so that it can be liquid during the vulcanization of rubber.

The solution described in above US patent has the disadvantages that a polyorganosiloxane water dispersion as release agent is employed and that no alkaline water solution is employed; moreover, this document describes the use of additives, such as mica or talc powder, to improve the lubrication and non-sticking properties of a release-agent composition, thus teaching away from the chemical modification of a polymer.

Are also known in the state of the art the technical solutions described below.

Document CN 1040972 580 A is referred to a de-moulding agent formed by at least co-polymerizing a fluorine-containing monomer, an acrylate monomer and an acid group monomer in such a way that the de-moulding performance and service life, similar with those of a long-chain fluothane copolymer, can be reached.

Document US 5,294,662 A is referred to polymers which can be used to prepare water-based compositions having the capability of forming a uniform, low surface-energy, thin film on a substrate. Such compositions comprise a polymer having at least one fluoroaliphatic moiety and at least one anionic moiety, and a novel polymer having at least one fluoroaliphatic moiety and at least one oxazoline moiety.

Document US 2012/30988 A1 is referred to a release agent composition which can impart moderate adhesion and releasability to the surface of articles such as protective materials for adhesive face of repositional notes, pressure-sensitive adhesive sheets and tapes, release films and release paper, and which has a low environmental burden, and its production process. The release agent composition of the present invention is characterized by comprising a fluorocopolymer having structural units based on a monomer (a) having a C1-6 polyfluoroalkyl group and structural units based on a (meth)acrylate (b) having a C18-30 alkyl group, and a medium.

Document JP 2013 194229 is referred to an aqueous release agent typical for moulding process of thermoplastic resin, thermosetting resin or the like, having excellent release performance. The aqueous release agent composition contains one or more selected from a group comprising a fluorine compound and one or more compounds contains ammonium ions or ammonia molecules and cations of a metals. None of the above-mentioned technical solutions, nor any combination thereof, is able to provide a polyelectrolyte fluorinated acrylic copolymer having a tuned number of charges in its backbone and being suitable for obtaining a release-agent composition able to withstand high pressures and temperatures (approximately 2.0*10⁶ Pa and up to 200 °C) for an extended period of time (usually from 10 to 60 minutes) required during vulcanization as well as compatible with the process and plants currently employed in the tyre factories.

Moreover, none of the above-mentioned technical solutions, nor any combination thereof, is able to provide a method for obtaining a polyelectrolyte fluorinated acrylic copolymer having a tuned number of charges in its backbone as well as a method for producing a release-agent composition comprising said polyelectrolyte fluorinated acrylic copolymer.

Finally, none of the above-mentioned technical solutions, nor any combination thereof, is able to provide a method for using a release-agent composition under the vulcanization conditions occurring with the process and plants currently employed in the tyre factories.

Therefore, even if many technical solutions as lubricants and release agents are available based on fluorinated polymer dispersions for reducing the adhesion of liquid contaminants on many surfaces, there still exists the need of a technical solution suitable for the adhesion issue of the rubber, one of the most sticky materials in nature, during the vulcanizing process.

Specifically, there still exists the need of a technical solution relevant to a water-based release-agent composition with improved non-sticking properties onto surfaces of different materials, able to withstand high pressures and temperatures (approximately 2.0*10⁶ Pa and up to 200 °C) for an extended period of time (usually from 10 to 60 minutes) required during vulcanization as well as compatible with the process and plants currently employed in the tyre factories.

Moreover, there still exists the need of providing a chemically modified polymer as well as a method to chemically modify a water-based non-sticking composition for rubber, suitable to be employed in vulcanizing pressure and temperature conditions. In brief therefore, up to the present time, to the Applicant's knowledge, there are no known solutions allowing to provide polyelectrolyte fluorinated acrylic copolymers, release-agent compositions comprising such copolymers and methods for obtaining such copolymers, for producing such release-agent compositions and for using the latter in vulcanizing rubber such that:
- have improved non-sticking properties and can be applied on several materials, specifically on rubber;
- overcome, simultaneously, the drawbacks of adhesion (sticking) and lubrication (slipping) of the inner and outer surfaces of tyres, respectively on the bladder and on the metallic mould during the vulcanization process;
- can be applied in the constricting conditions, such as those of the tyre industrial manufacturing.

Therefore the Applicant, with the polyelectrolyte fluorinated acrylic copolymers, the release-agent compositions comprising such copolymers and the methods for obtaining such copolymers, for producing such release-agent compositions and for using the latter in vulcanizing rubber according to the present invention, intends to remedy such lack.

### OBJECTS AND SUMMARY OF THE INVENTION

It is an object of the present invention to overcome the drawbacks of the known prior art related to the adhesion (sticking) and lubrication (slipping) on several materials, specifically on rubber.

It is a specific object of the present invention to overcome the drawbacks of the known prior art related to the adhesion (sticking) and lubrication (slipping) of the inner and outer surfaces of tires, respectively on the bladder and on the metallic mould during the vulcanization process.

It is also a specific object of the present invention to overcome the drawbacks of the known prior art related to the adhesion (sticking) and lubrication (slipping) under constricting conditions such as those dictated by the industrial plants and production process of the tire industrial manufacturing.

The present invention intends to solve the problem of providing a method to chemically modify a water based non-sticking composition for rubber, suitable to be employed in vulcanizing pressure and temperature conditions.

In particular, the present invention intends to provide a chemically engineered organic fluorinated copolymer having a tuned number of charges in its backbone and a water dispersion of said copolymer through a reaction with strong alkaline water solution.

Moreover, the present invention intends to provide the methods for obtaining polyelectrolyte fluorinated acrylic copolymers, for producing release-agent compositions comprising said copolymers and for using said release-agent compositions in vulcanizing rubber.

The aforesaid and other objects and advantages of the invention, as will appear from the following description, are achieved with a polyelectrolyte fluorinated acrylic copolymer like according to claim 1.

Moreover, the aforesaid and other objects and advantages of the invention are achieved with a release-agent composition according to claim 7.

Moreover, the aforesaid and other objects and advantages of the invention are achieved with a method for obtaining a polyelectrolyte fluorinated acrylic copolymer according to claim 9.

Moreover, the aforesaid and other objects and advantages of the invention are achieved with a method for producing a release-agent composition according to claim 12.

Moreover, the aforesaid and other objects and advantages of the invention are achieved with a method for using a release-agent composition according to claim 18.

Preferred embodiments and variants of the polyelectrolyte fluorinated acrylic copolymer, the release-agent composition and the methods of the present invention are the subject-matter of the dependent claims.

It is understood that all the annexed claims form an integral part of the present description and that each of the technical features therein claimed is possibly independent and autonomously usable with respect to the other aspects of the invention.

It will be immediately evident that several modifications (for example relevant to shape, sizes, arrangements and parts with equivalent functionality) could be brought to what described without departing from the scope of the invention as claimed in the appended claims.

Advantageously, the technical solution according to the present invention allows to:
- tune the number of charges in the backbone of the copolymer;
- improve the non-sticking and slipping properties between the surfaces of the tyre in contact with both the metallic mould and the rubber of the bladder;
- reduce risks and hazards during the use thanks to the water-based composition;
- produce a composition less expensive than commercially available products;
- be used in the vulcanization process in the conventional tyre factories.

Further advantageous features will appear more evident from the following description of preferred but not exclusive embodiments, merely given by way of explanatory and not limiting example.

### BRIEF DESCRIPTION OF THE DRAWINGS

The present invention will be described hereinbelow by means of some preferred embodiments, given by way of explanatory and not limiting example, with reference to the accompanying drawings. These drawings illustrate different aspects and examples of the present invention and, where appropriate, similar structures, components, materials and/or elements in different figures are denoted by similar reference numbers.
FIG. 1 is a flow chart showing the steps of the method for producing a release-agent composition according to the present invention;
FIG. 2 shows a graph illustrating the influence of the added base solution on the adhesion force between composite rubber and aluminium; and
FIG. 3 is a flow chart showing the steps of the method for using a release-agent composition according to the present invention.

### DETAILED DESCRIPTION OF THE INVENTION

While the invention is susceptible of various modifications and alternative constructions, some preferred embodiments are shown in the drawings and will be described in detail hereinbelow.

It should be understood, however, that there is no intention to limit the invention to the specific illustrated embodiments but, on the contrary, the invention intends to cover all the modifications, alternative constructions and equivalents that fall within the scope of the invention as defined in the claims.

In the following description, therefore, the use of "for example", "etc." and "or" denotes non-exclusive alternatives without limitation, unless otherwise indicated; the use of "also" means "among, but not limited to", unless otherwise indicated; the use of "includes / comprises" means "includes / comprises, but not limited to", unless otherwise indicated.

The present invention is based on the innovative concept of providing a chemically modification of a fluorinated copolymer by using an alkaline water solution, with the aim of obtaining a polyelectrolyte copolymer with a tuned number of charges in its backbone; the modified fluorinated copolymer improves the non-sticking and lubrication properties of a corresponding fluorinated acrylic copolymer water dispersion towards rubber on different materials in vulcanizing pressure and temperature conditions.

Specifically, the present invention provides non-sticking surface coatings for high temperature and pressure applications involving natural or synthetic rubber and, in particular, it avoids sticking of the tyre's rubber onto different materials coming in contact with it, during the vulcanizing step of their manufacturing process, commonly carried out in a mould.

From a physical-chemical point of view, the improvement of the non-sticking and lubrication properties consists in the elimination of the interactions between the composite rubbers of the outer surface of the tyre and metallic surface of the mould or between the inner surface of the tyre and the rubber surface of the bladder.

Independent aspects of the present invention, which will be described in detail hereinafter, refer to:
- a polyelectrolyte fluorinated acrylic copolymer (i.e. a copolymer which in water separates into cations and anions) having a tuned number of charges in its backbone;
- a release-agent composition comprising said polyelectrolyte fluorinated acrylic copolymer with non-sticking and lubrication properties;
- a method for obtaining said polyelectrolyte fluorinated acrylic copolymer;
- a method for producing said release-agent composition; and
   - a method for using said release-agent composition in the tyre manufacturing.

The chemically engineered polyelectrolyte fluorinated acrylic copolymer according to one aspect of the present invention, independent and autonomously usable with respect to the other aspects of the invention, has the following formula (I): 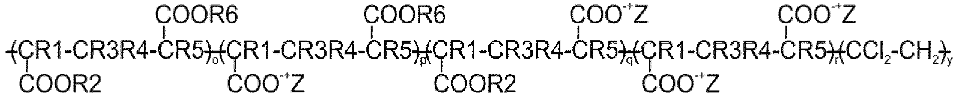 wherein:
- Z is a counter-ion
- R1, R2, R3, R4 and R5 are alkyl chains with a generic formula of -CₙH₂ₙ₊₁ with 0 ≤ n ≤ 22
- R6 is a fluorinated chain with a generic formula of -CₙH₂ₙ-CₘF₂ₘ₊₁ with 0 ≤ n ≤ 4 and 0 ≤ m ≤ 12
- o, p, q, r and y are the degree of polymerization of each single different repetitive unit of the copolymer of formula (I) ranging, respectively, from 10 repetitive units to 30 repetitive units, from 0 repetitive units to 5 repetitive units, from 0 repetitive units to 5 repetitive units, from 0 repetitive units to 1 repetitive unit, and from 0 repetitive units to 10 repetitive units.

Said chemically engineered copolymer of formula (I) has a tuned number of charges in its backbone ranging from 1 to 12, said tuned number of charges being able to eliminate the above-mentioned interactions and to provide the required lubrication between the composite rubbers of the outer surface of the tyre and metallic surface of the mould or between the inner surface of the tyre and the rubber surface of the bladder in limiting vulcanizing and moulding conditions.

Preferably, said copolymer has a formula (I) wherein:
- n is 0 or 1 for R1, R3, R4 and R5
- n is 6 or 8 for R2
- n is 2 and m is 6 or 8 for R6, and
- o, p, q, r and y are, respectively, 19 repetitive units, 0 repetitive units, 1 repetitive unit, 0 repetitive units and 0 repetitive units;
and wherein the tuned number of charges is 1.

According to the invention, said counter-ion Z is selected from the group comprising Sodium (Na⁺), Potassium (K⁺) and Ammonium (NH₄⁺) counter-ions, and is preferably Sodium (Na⁺).

The chemically engineered polyelectrolyte fluorinated acrylic copolymer according to the invention has an atomic percentage of Fluorine (F) ranging between 15% and 45%, preferably of 30%.

The chemical structure of the chemically engineered polyelectrolyte fluorinated acrylic copolymer according to the invention has comprises alternative, random and block distributions of fluorinated and aliphatic chains, the random distributions thereof being preferred.

According to another aspect of the present invention, independent and autonomously usable with respect to the other aspects of the invention, a release-agent composition comprises a polyelectrolyte fluorinated acrylic copolymer of formula (I) as previously described dispersed into water, the molar ratio copolymer/water ranging from 1/10,000 to 5/10,000, preferably being of 3/10,000.

Said release-agent composition shows improved non-sticking and lubrication properties and it able to withstand high pressures around 2.0*10⁶ Pa and high temperatures up to 200 °C for an extended period of time from 10 to 60 minutes, which are usual vulcanization conditions.

According to another aspect of the present invention, independent and autonomously usable with respect to the other aspects of the invention, a polyelectrolyte fluorinated acrylic copolymer having the following formula (I): 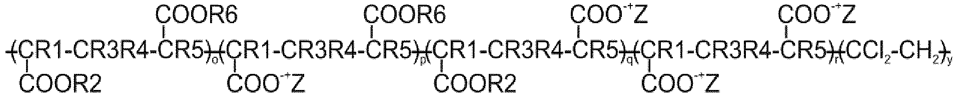 is obtained by reacting a generic fluorinated acrylic copolymer having the following formula (II): 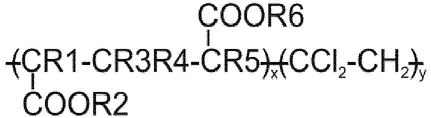 with an aqueous base solution releasing counter-ions Z,
wherein:
- R1, R2, R3, R4 and R5 are alkyl chains with a generic formula of -CₙH₂ₙ₊₁ with 0 ≤ n ≤ 22,
- R6 is a fluorinated chain with a generic formula of -CₙH₂ₙ-CₘF₂ₘ₊₁ with 0 ≤ n ≤ 4 and 0 ≤ m ≤ 12,
- o, p, q, r and y are the degree of polymerization of each single different repetitive unit of the copolymer of formula (I) ranging, respectively, from 10 repetitive units to 30 repetitive units, from 0 repetitive units to 5 repetitive units, from 0 repetitive units to 5 repetitive units, from 0 repetitive units to 1 repetitive unit, and from 0 repetitive units to 10 repetitive units, and
- x is the degree of polymerization of the generic copolymer of formula (II) ranging from 10 repetitive units to 51 repetitive units.

The above-mentioned reaction generates a tuned number of charges on the backbone of the copolymer of formula (I), the number of charges ranging from 1 to 12.

The copolymer of formula (I) is preferably obtained with:
- n is 0 or 1 for R1, R3, R4 and R5,
- n is 6 or 8 for R2,
- n is 2 and m is 6 or 8 for R6,
- o + p + q + r = x,
- o, p, q, r and y are, respectively, 19 repetitive units, 0 repetitive units, 1 repetitive unit, 0 repetitive units and 0 repetitive units, and
- x is 20 repetitive units;
and with a tuned number of charges is 1.

The method for obtaining the copolymer of formula (I) uses a base selected from the group comprising Sodium Hydroxide (NaOH), Potassium Hydroxide (KOH) and Ammonium Hydroxide (NH₄OH), preferably uses Sodium Hydroxide (NaOH).

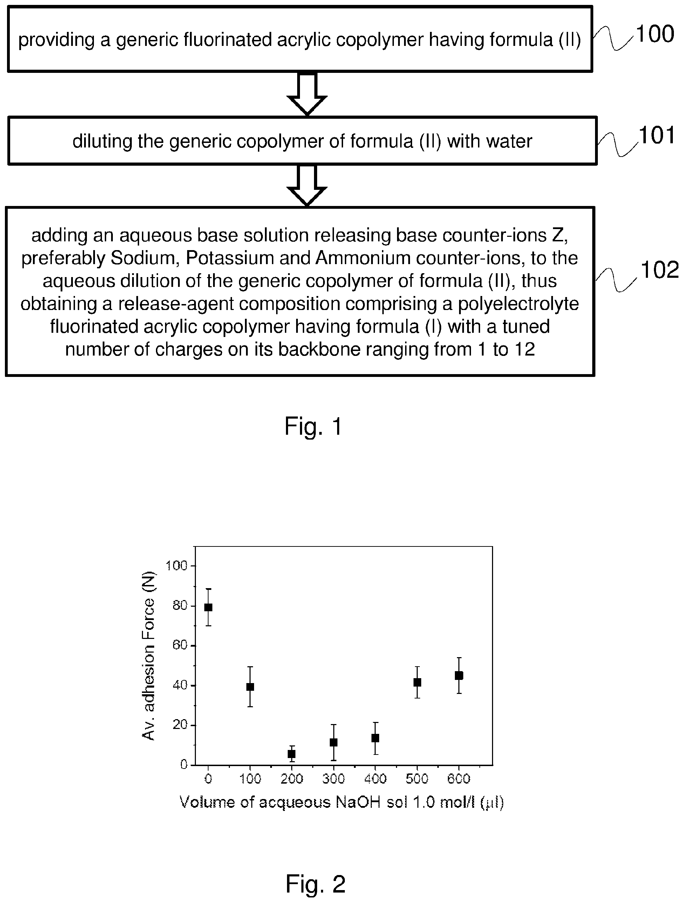

According to another aspect of the present invention, independent and autonomously usable with respect to the other aspects of the invention, and referring to Figure 1, a method for producing a release-agent composition is herein disclosed. Said method comprises providing a water dispersion of a selected acrylic fluorinated copolymer of generic formula, in particular, comprises the following steps:
- providing a generic fluorinated acrylic copolymer having the following formula (II): 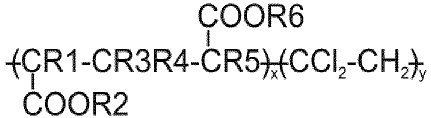 wherein:
   - R1, R2, R3, R4 and R5 are alkyl chains with a generic formula of - CₙH₂ₙ₊₁ with 0 ≤ n ≤ 22,
   - R6 is a fluorinated chain with a generic formula of -CₙH₂ₙ-CₘF₂ₘ₊₁ with 0 ≤ n ≤ 4 and 0 ≤ m ≤ 12, and
   - x is the degree of polymerization of the generic copolymer of formula (II) ranging from 10 repetitive units to 51 repetitive units, (step 100);
- diluting the generic copolymer of formula (II) with water to a value ranging from 0.1% by weight to 5.0% by weight, preferably to 1.0% by weight (step 101);
- adding an aqueous base solution releasing counter-ions Z to the aqueous dispersion of the generic copolymer of formula (II), thus causing the following not reversible reaction of saponification between the ester groups of the perfluorinated acrylic copolymer and the base molecules: 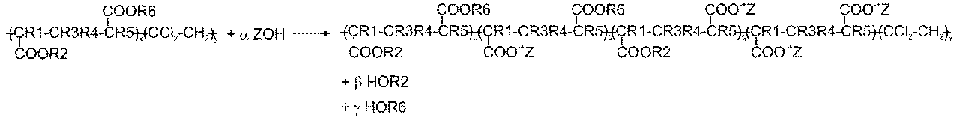 wherein:
   - R1, R2, R3, R4, R5, R6 and x are the same as defined previously,
   - o, p, q, r and y are the degree of polymerization of each single different repetitive unit of the copolymer of formula (I) ranging, respectively, from 10 repetitive units to 30 repetitive units, from 0 repetitive units to 5 repetitive units, from 0 repetitive units to 5 repetitive units, from 0 repetitive units to 1 repetitive unit, and from 0 repetitive units to 10 repetitive units,
   - α is the initial number of moles of ZOH added,
   - β and γ are the number of moles of HOR2 and HOR6, respectively, produced after reaction, the sum of β and γ being α (α = β + γ), during this step a polyelectrolyte fluorinated acrylic copolymer having the following formula (I): 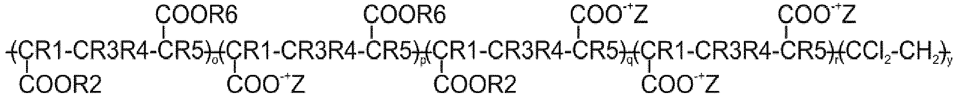 being produced, which has a tuned number of charges on its backbone ranging from 1 to 12 (step 102).

Preferably, said method provides that:
- n is 0 or 1 for R1, R3, R4 and R5,
- n is 6 or 8 for R2,
- n is 2 and m is 6 or 8 for R6,
- o + p + q + r = x,
- o, p, q, r and y are, respectively, 19 repetitive units, 0 repetitive units, 1 repetitive unit, 0 repetitive units and 0 repetitive units, and
- x is 20 repetitive units;
and that the tuned number of charges is 1.

The method for producing a release-agent composition uses a base selected from the group comprising Sodium Hydroxide (NaOH), Potassium Hydroxide (KOH) and Ammonium Hydroxide (NH₄OH), preferably uses Sodium Hydroxide (NaOH).

According to said method, the generic copolymer of formula (II) is diluted with water to a value ranging from 0.1% by weight to 5.0% by weight, preferably to 1.0% by weight.

Starting water dispersions of fluorinated acrylic copolymers available on the market as non-sticking agents for porous or fibrous materials (such as clay, sandstone, brick, Saltillo, marble, sandstone, granite, limestone, wood, textiles, non-woven textiles, etc.) can be employed; for example, suitable commercial water dispersed fluorinated acrylic copolymers are Dupont™ Capstone™, Megatran® 260F from Interpolymer and RU-2000 Series from Procachem Corporation; said commercial water dispersions are further diluted with deionized water to 0.1-5.0% by weight, preferably to 1.0 wt%.

According to said method, the diluted generic copolymer of formula (II) or the commercial water dispersion is then mixed with the aqueous base solution having a concentration ranging from 0.1 mol/L to 5.0 mol/L, preferably of 1.0 mol/L; it is important to note that a strong alkaline water solution has to be employed, thus provoking a not reversible reaction of saponification between the ester groups of the perfluorinated acrylic copolymer and the base molecules.

According to said method, any secondary reaction is envisaged and the basic hydrolysis of the esters leads to the production of a tuned amount of carboxylates functions on the backbone of the copolymer and alcohol residues; the obtained composition, comprising the polymeric polyelectrolyte obtained and reaction residues (which tend to evaporate during the high temperature application), shows improved non-sticking properties towards rubber on several materials also working in not standard pressure and temperature conditions.

In the preferred embodiment of the invention, the generic copolymer of formula (II) is diluted with deionized water and then mixed with an aqueous NaOH solution, and the following reaction occurs: 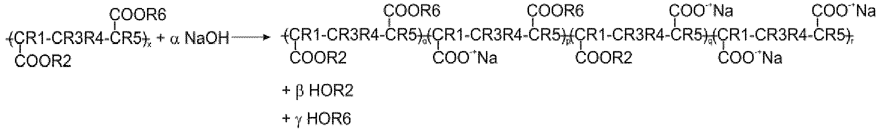 wherein all the symbols are the same as defined previously and have the same meaning and values.

With reference to Figure 2, the experimental data available for the aforesaid preferred embodiment of the invention, which will be discussed in detail later on, indicate that the average adhesion force for a release-agent composition the composition produced through said method can reach values of 5 N, far below from other release-agent compositions according to the known prior art; furthermore, the outcomes of the tests also prove the effect of the tunable charge amount in the polyelectrolyte copolymer of formula (I), which is related to the amount of alkaline solution added, since it is necessary an appropriate amount of alkaline solution in order to achieve the desired improvement of the non-sticking properties.

The water-based release-agent composition is easily applicable, using a spray gun, onto the target surface previously cleaned with solvents and heated up at temperatures of 130 °C.

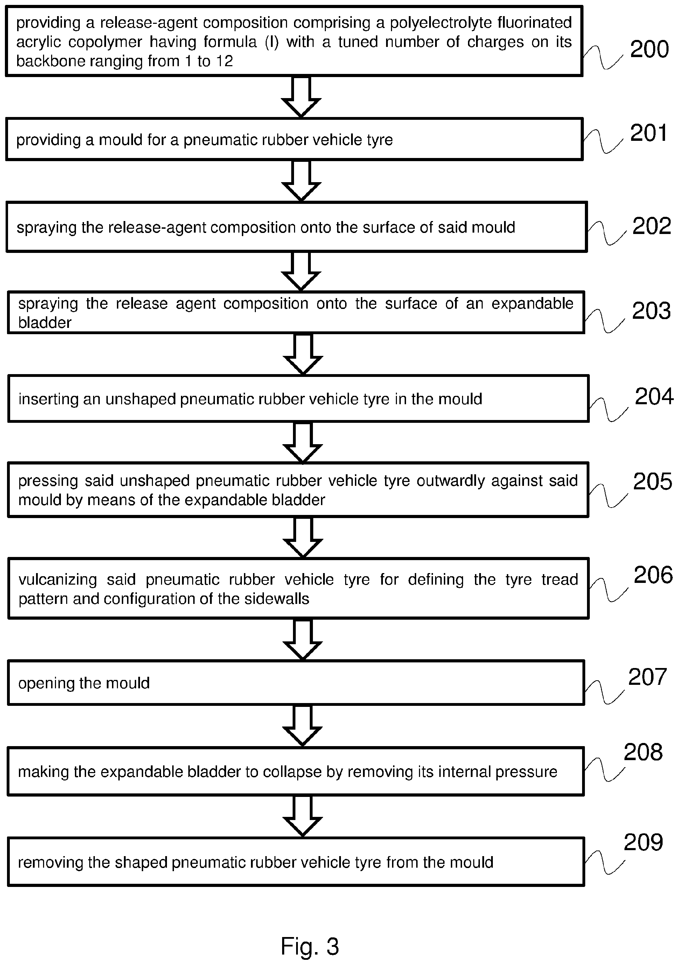

According to another aspect of the present invention, independent and autonomously usable with respect to the other aspects of the invention, and referring to Figure 3, said release-agent composition can be used, and it is preferably used, in the tyre manufacturing.

Said method comprises the following steps:
- providing a release-agent composition comprising a polyelectrolyte fluorinated acrylic copolymer having formula (I) with a tuned number of charges on its backbone ranging from 1 to 12 (step 200);
- providing a mould for a pneumatic rubber vehicle tyre (step 201);
- spraying the release-agent composition onto the surface of said mould (step 202);
- spraying the release agent composition onto the surface of an expandable bladder (step 203);
- inserting an unshaped pneumatic rubber vehicle tyre in the mould (step 204);
- pressing said unshaped pneumatic rubber vehicle tyre outwardly against said mould by means of the expandable bladder (step 205);
- vulcanizing said pneumatic rubber vehicle tyre for defining the tyre tread pattern and configuration of the sidewalls (step 206);
- opening the mould (step 207);
- making the expandable bladder to collapse by removing its internal pressure (step 208); and
- removing the shaped pneumatic rubber vehicle tyre from the mould (step 209).

According to said method, said rubber is a natural rubber or a synthetic rubber or composites thereof.

Also according to said method, the step of vulcanizing (step 205) takes place at high pressures around 2.0*10⁶ Pa and high temperatures up to 200 °C for an extended period of time from 10 to 60 minutes.

Also according to said method, the average adhesion force between the mould and the rubber is lower or equal to 5 N and the average adhesion force between the rubber and the bladder is about 0 N.

As anticipated, the efficacy of the present invention has been tested by means of some Examples, which are to be understood as illustrative but not limitative of the present invention.

### Example 1

A water dispersion of the polyelectrolyte fluorinated acrylic copolymer of formula (I) was prepared; a fluorinated acrylic copolymer was diluted to 1.0% by weight, with deionized water; in order to produce the polyelectrolyte, an aqueous NaOH solution 1.0 mol/L, was used; 200 µL, of aqueous NaOH 1.0 mol/L solution was added to 30 mL of Capstone 1.0% by weight water dispersion.

The release properties of the obtained products have been tested by adhesion force measurements both on metallic surface of pure metals, such as aluminium of pure metals and on rubber surface.

Preliminary tests have been carried out also on transition metals, such as copper, alloys (stainless steel) and surface treated alloys (galvanized steel).

In particular, the improvement of non-sticking properties of the release-agent of the invention was tested and compared both to other possible reacting conditions and to commercially available products.

In order to test the release properties, the final solutions of Example 1 were sprayed using a spray gun onto the surface of an aluminium plate (area: 2.5 cm x 5.0 cm) previously cleaned with solvents and heated up at temperatures of 130 °C; this high temperature is kept constant during the spray in order to simulate the procedure of release-agent application operated in tyre producing companies.

A quantity of 20 mL/m² of solution has been found to be enough to obtain a complete coverage of the tested aluminium surface.

After that, the sprayed aluminium plate was cooled down to room temperature, and it was subsequently overlaid with a sheet of unvulcanized butyl rubber (1.00 cm x 1.00 cm x 0.15 cm thick) provided by a tyre producing company.

On top of it, and rotated by 90 ° (in plane), another aluminium plate of the same size that had not been sprayed with the testing release solution was placed.

This "cross shape" assembly was placed in a press and pressed for 30 minutes at 150 °C and 1.6*10⁶ Pa.

The release performance after pressing was evaluated by measuring the force needed to separate the butyl rubber sheet (strongly attached to the top non-sprayed aluminium plate) from the bottom aluminium plate sprayed with the release solution.

For this scope an ad-hoc configuration of an instrument for mechanical characterization of materials (Instron 3365 Dual Column) was implemented; the assembly was placed horizontally on a holder allowing locking the bottom sprayed aluminium plate; the top non-sprayed aluminium plate was instead connected to the moving arm of the Instron by steel wires.

During the experiment, the mechanical arm was moved in vertical direction (normal to the assembly surface) at a fixed velocity of 3 mm/ min; the force required for this movement was measured and recorded till the separation of the two aluminium plates.

The release performance of the coating was evaluated by considering the maximum load measured to separate the cured butyl rubber sheet from the sprayed aluminium plate (adhesion force).

### Comparative Example 2

A water dispersed fluorinated acrylic copolymer was prepared as in Example 1, but omitting the addition of aqueous base solution; the release properties have been tested as in Example 1.

### Comparative Example 3

A water dispersion of the polyelectrolyte fluorinated acrylic copolymer of formula (I) was prepared as in Example 1, but using larger amount of aqueous NaOH solution (> 450 µL); the release properties have been tested as in the previous examples.

### Comparative Example 4

A water dispersed fluorinated acrylic copolymer was prepared as in Example 1, but using an aqueous HCl solution 1.1 mol/L in spite of the aqueous NaOH solution; in this condition has been confirmed that any chemical modification of the polymer occurs; the release properties have been tested as in the previous examples.

### Comparative Example 5

A comparative test of release properties with a polymer having well-known high non-sticking properties such as polytetrafluoroethylene (PTFE) has also been performed; a PTFE 60% by weight dispersion in water from Aldrich Chemistry was diluted at 1% by weight in water; the release properties have been tested as in the previous examples.

### Comparative Example 6

A comparative test has also been performed on commercially available release composition, suggested by the manufacturer as suitable release agent for rubber, such as 132-469 PTFE DRY FILM LUBE from RS Components Ltd; the release properties have been tested as in the previous examples.

### Example 7

In order to prove the release properties also on rubber, the release composition prepared as in Example 1 was sprayed onto the surface of a rubber sheet (area: 2.5 cm x 5.0 cm) provided by a tyre producing company to simulate the bladder surface; as in Example 1, the substrate (rubber sheet) is heated up at temperatures of 130 °C and this temperature is kept constant during the spray in order to simulate the procedure of release-agent application operated in tyre industry manufacturing; after the sprayed rubber sheet had cooled down to room temperature, it was overlaid (rotated of 90° in plane) with a sheet of unvulcanized butyl rubber (2.50 cm x 5.00 cm x 0.15 cm thick) provided by a tyre producing company.

As in Example 1, this "cross shape" assembly was placed in a press and pressed for 30 minutes at 150 °C / 1.6*10⁶ Pa.

The release performance after pressing was evaluated by measuring the force needed to separate the top butyl rubber sheet from the bottom rubber sheet (bladder) sprayed with the release solution using the ad-hoc configuration described in Example 1; results obtained indicate that average adhesion force is about 0 N.

The outcomes of the adhesion tests of the different examples (Examples 1 and Comparative Examples 2 to 6) on aluminium surface are reported in the following table; also the outcome of the adhesion test of an example (Example 7) made of rubber-rubber, instead of rubber-aluminium, is reported in the following table:

| | Volume of aqueous NaOH solution 1.0 mol/L (µl) | Average adhesion force (N) |
|---|---|---|
| Example 1 | 200 | 5 |
| Comparative Example 2 | 0 | 80 |
| Comparative Example 3 | 450-600 | 30-50 |
| Comparative Example 4 | / | 65-90 |
| Comparative Example 5 | / | 15 |
| Comparative Example 6 | / | 62 |
| Example 7 | 200 | 0 |

The obtained results indicate that the average adhesion force for the composition obtained can reach values of 5 N, far below from other release agents employed in example 5 (15 N) and in example 6 (62 N), while the force needed to separate the top butyl rubber sheet from the bladder described in Example 7 is about 0 N.

Furthermore, the results of the tests also prove the effect of the tunable charge amount in the polyelectrolyte polymer, related to the amount of the added alkaline solution as highlighted in the already introduced graph shown in FIG. 2, since it is necessary an appropriate amount alkaline solution in order to achieve the improvement of the non-sticking properties.

As it is deducible from the above description, the innovative technical solution herein described has the following advantageous features:
- tuned number of charges in the backbone,
- improved non-sticking and slipping properties between the surfaces of the tyre in contact with both the metallic mould and the rubber of the bladder,
- reduced risks and hazards during the use (water-based),
- easily scalable system to be used in the vulcanization process in the conventional tyre factories, and
- less expensive than commercially available products.

From the above description it is clear, therefore, that the polyelectrolyte fluorinated acrylic copolymers, the release-agent compositions comprising such copolymers and the methods for obtaining such copolymers, for producing such release-agent compositions and for using the latter in vulcanizing rubber as the described hereinabove allow to reach the proposed objects.

## Claims

1. A polyelectrolyte fluorinated acrylic copolymer suitable for produce a release-agent composition for vulcanizing natural or synthetic rubber having the following formula (I): 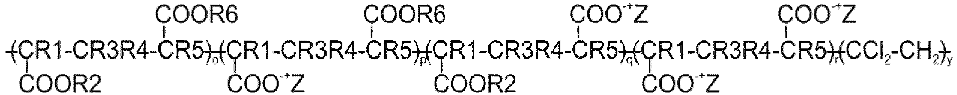 wherein:
- Z is a counter-ion
- R1, R2, R3, R4 and R5 are alkyl chains with a generic formula of -CₙH₂ₙ₊₁ with 0 ≤ n ≤ 22
- R6 is a fluorinated chain with a generic formula of -CₙH₂ₙ-CₘF₂ₘ₊₁ with 0 ≤ n ≤ 4 and 0 ≤ m ≤ 12
- o, p, q, r and y are the degree of polymerization of each single different repetitive unit of the copolymer of formula (I) ranging, respectively, from 10 repetitive units to 30 repetitive units, from 0 repetitive units to 5 repetitive units, from 0 repetitive units to 5 repetitive units, from 0 repetitive units to 1 repetitive unit, and from 0 repetitive units to 10 repetitive units,
said copolymer of formula (I) having a ranging number of charges in its backbone from 1 to 12 in order to improve the non-sticking and lubrication properties of a corresponding fluorinated acrylic copolymer water dispersion towards rubber on different materials in vulcanizing pressure and temperature conditions.

2. Polyelectrolyte fluorinated acrylic copolymer according to claim 1, wherein:
- n is 0 or 1 for R1, R3, R4 and R5
- n is 6 or 8 for R2
- n is 2 and m is 6 or 8 for R6
- o, p, q, r and y are, respectively, 19 repetitive units, 0 repetitive units, 1 repetitive unit, 0 repetitive units and 0 repetitive units, and
- the tuned number of charges is 1.

3. Polyelectrolyte fluorinated acrylic copolymer according to claim 1 or 2, wherein said counter-ion Z is selected from the group comprising Sodium (Na⁺), Potassium (K⁺) and Ammonium (NH₄⁺) counter-ions.

4. Polyelectrolyte fluorinated acrylic copolymer according to any of the preceding claims, wherein the atomic percentage of Fluorine (F) ranges between 15% and 45%.

5. Polyelectrolyte fluorinated acrylic copolymer according to claim 4, wherein the atomic percentage of Fluorine (F) is of 30%.

6. Polyelectrolyte fluorinated acrylic copolymer according to any of the preceding claims, wherein the chemical structure of the copolymer comprises alternative, random and block distributions of fluorinated and aliphatic chains.

7. A release-agent composition comprising a polyelectrolyte fluorinated acrylic copolymer of formula (I) according to any of the preceding claims 1 to 5 dispersed into water, wherein the molar ratio copolymer/water ranges from 1/10,000 to 5/10,000.

8. Release-agent composition according to claim 7, comprising the polyelectrolyte fluorinated acrylic copolymer of formula (I) wherein the molar ratio copolymer/water is 3/10,000.

9. A method for obtaining a polyelectrolyte fluorinated acrylic copolymer for producing release-agent compositions having the following formula (I): 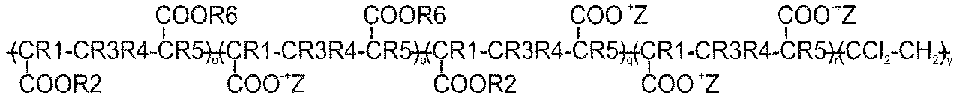 by reacting a generic fluorinated acrylic copolymer having the following formula (II): 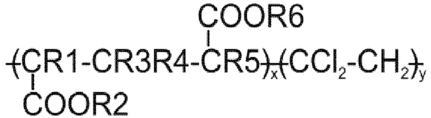 with an aqueous base solution releasing counter-ions Z,
wherein:
- R1, R2, R3, R4 and R5 are alkyl chains with a generic formula of -CₙH₂ₙ₊₁ with 0 ≤ n ≤ 22,
- R6 is a fluorinated chain with a generic formula of -CₙH₂ₙ-CₘF₂ₘ₊₁ with 0 ≤ n ≤ 4 and 0 ≤ m ≤ 12,
- o, p, q, r and y are the degree of polymerization of each single different repetitive unit of the copolymer of formula (I) ranging, respectively, from 10 repetitive units to 30 repetitive units, from 0 repetitive units to 5 repetitive units, from 0 repetitive units to 5 repetitive units, from 0 repetitive units to 1 repetitive unit, and from 0 repetitive units to 10 repetitive units, and
- x is the degree of polymerization of the generic copolymer of formula (II) ranging from 10 repetitive units to 51 repetitive units,
said reaction generating a ranging number of charges on the backbone of the copolymer of formula (I), from 1 to 12.

10. Method according to claim 9, wherein:
- n is 0 or 1 for R1, R3, R4 and R5,
- n is 6 or 8 for R2,
- n is 2 and m is 6 or 8 for R6,
- o + p + q + r = x,
- o, p, q, r and y are, respectively, 19 repetitive units, 0 repetitive units, 1 repetitive unit, 0 repetitive units and 0 repetitive units,
- x is 20 repetitive units, and
- the tuned number of charges is 1.

11. Method according to claim 9 or 10, wherein the base of the aqueous base solution is selected from the group comprising Sodium Hydroxide (NaOH), Potassium Hydroxide (KOH) and Ammonium Hydroxide (NH₄OH).

12. A method for producing a release-agent composition for vulcanizing natural or synthetic rubber comprising the following steps:
- providing a generic fluorinated acrylic copolymer having the following formula (II): 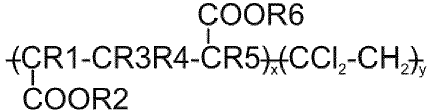 wherein:
- R1, R2, R3, R4 and R5 are alkyl chains with a generic formula of - CₙH₂ₙ₊₁ with 0 ≤ n ≤ 22,
- R6 is a fluorinated chain with a generic formula of -CₙH₂ₙ-CₘF₂ₘ₊₁ with 0 ≤ n ≤ 4 and 0 ≤ m ≤ 12, and
- x is the degree of polymerization of the generic copolymer of formula (II) ranging from 10 repetitive units to 51 repetitive units,
(step 100);
- diluting the generic copolymer of formula (II) with water to a value ranging from 0.1% by weight to 5.0% by weight (step 101);
- adding an aqueous base solution releasing counter-ions Z to the aqueous dispersion of the generic copolymer of formula (II), thus causing the following not reversible reaction of saponification between the ester groups of the perfluorinated acrylic copolymer and the base molecules: 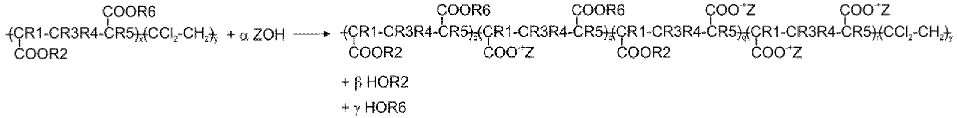 wherein:
- R1, R2, R3, R4, R5, R6 and x are the same as defined previously,
- o, p, q, r and y are the degree of polymerization of each single different repetitive unit of the copolymer of formula (I) ranging, respectively, from 10 repetitive units to 30 repetitive units, from 0 repetitive units to 5 repetitive units, from 0 repetitive units to 5 repetitive units, from 0 repetitive units to 1 repetitive unit, and from 0 repetitive units to 10 repetitive units,
- α is the initial number of moles of ZOH added,
- β and γ are the number of moles of HOR2 and HOR6, respectively, produced after reaction, the sum of β and γ being α (α = β + γ), during this step a polyelectrolyte fluorinated acrylic copolymer having the following formula (I): 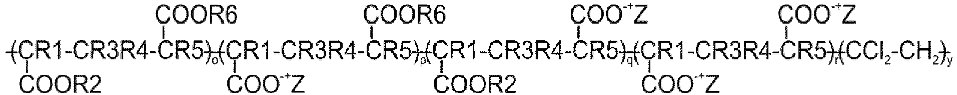
being produced, which has a ranging number of charges on its backbone from 1 to 12 (step 102).

13. Method according to claim 12, wherein:
- n is 0 or 1 for R1, R3, R4 and R5,
- n is 6 or 8 for R2,
- n is 2 and m is 6 or 8 for R6,
- o + p + q + r = x,
- o, p, q, r and y are, respectively, 19 repetitive units, 0 repetitive units, 1 repetitive unit, 0 repetitive units and 0 repetitive units,
- x is 20 repetitive units, and
- the tuned number of charges is 1.

14. Method according to claim 12 or 13, wherein the base of the aqueous base solution is selected from the group comprising Sodium Hydroxide (NaOH), Potassium Hydroxide (KOH) and Ammonium Hydroxide (NH₄OH).

15. Method according to any of the preceding claims 12 to 14, wherein the generic copolymer of formula (II) is diluted with water to a value of 1.0% by weight (step 101), then mixed with the aqueous base solution having a concentration ranging from 0.1 mol/L to 5.0 mol/L.

16. Method according to claim 15, wherein the generic copolymer of formula (II), diluted with water to a value of 1.0% by weight, is mixed with the aqueous base solution having a concentration of 1.0 mol/L.

17. Method according to claim 15, wherein the generic copolymer of formula (II) is diluted with deionized water and then mixed with an aqueous NaOH solution.

18. A method for using a release-agent composition in vulcanizing rubber according to claims 7 or 8 or produced by a method according to any of the preceding claims 12 to 17 comprising the following steps:
- providing a release-agent composition comprising a polyelectrolyte fluorinated acrylic copolymer having formula (I) with a tuned number of charges on its backbone ranging from 1 to 12 (step 200);
- providing a mould for a pneumatic rubber vehicle tyre (step 201);
- spraying the release-agent composition onto the surface of said mould (step 202);
- spraying the release agent composition onto the surface of an expandable bladder (step 203);
- inserting an unshaped pneumatic rubber vehicle tyre in the mould (step 204);
- pressing said unshaped pneumatic rubber vehicle tyre outwardly against said mould by means of the expandable bladder (step 205);
- vulcanizing said pneumatic rubber vehicle tyre for defining the tyre tread pattern and configuration of the sidewalls (step 206);
- opening the mould (step 207);
- making the expandable bladder to collapse by removing its internal pressure (step 208); and
- removing the shaped pneumatic rubber vehicle tyre from the mould (step 209).

19. Method according to claim 18, wherein said rubber is a natural rubber or a synthetic rubber or composites thereof.

20. Method according to claim 18 or 19, wherein the step of vulcanizing (step 205) takes place at high pressures around 2.0*10⁶ Pa and high temperatures up to 200 °C for an extended period of time from 10 to 60 minutes.

21. Method according to claim 18 or 19 or 20, wherein the average adhesion force between the mould and the rubber is lower or equal to 5 N and the average adhesion force between the rubber and the bladder is about 0 N (wherein the average adhesion force is determined as defined in the experimental part).

## Patentansprüche

1. Fluoriertes Polyelektrolytacrylcopolymer, das geeignet ist, eine Relaiszusammensetzung eines Mittels zur Vulkanisation eines natürlichen oder synthetischen Gummis mit der folgenden Formel (I) herzustellen: 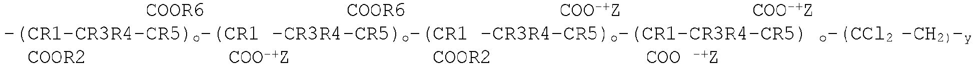 wobei:
- Z ist ein Gegen-Ion
- Rl, R2, R3, R4 und R5 sind Alkylketten mit einer generischen Formel von : -CₙH₂ₙ₊₁ mit 0 ≤ n ≤ 22
- R6 ist eine fluorierte Kette der generischer Formel von: - CₙH₂ₙ-CₘF₂ₘ₊₁ mit 0 ≤ n ≤ 4 und 0 ≤ m ≤ 12
- o, p, q, r und y sind der Polymerisationsgrad jeder einzelnen Wiederholungseinheit, der sich vom Copolymer der Formel (I) unterscheidet, und reicht von 10 Wiederholungseinheiten bis 30 Wiederholungseinheiten, von 0 Wiederholungseinheiten bis 5 Wiederholungseinheiten; von 0 Wiederholungseinheiten bis 5 Wiederholungseinheiten, von 0 Wiederholungseinheiten bis 1 Wiederholungseinheit und von 0 Wiederholungseinheiten bis 10 Wiederholungseinheiten,
wobei das Copolymer der Formel (I) eine Anzahl von Ladungen in seinem Backbone im Bereich von 1 bis 12 aufweist, um die nicht klebrigen und schmierenden Eigenschaften einer entsprechenden Dispersion von Wasser aus dem entsprechenden fluorierten Acrylcopolymer, in Richtung des Gummis auf verschiedene Materialien unter Vulkanisationsdruck- und Temperaturbedingungen, zu verbessern.

2. Fluoriertes Polyelektrolytacrylcopolymer nach Anspruch 1, wobei:
- n ist 0 oder 1 für R1, R3, R4 und R5
- n ist 6 oder 8 für R2
- n ist 2 und m ist 6 oder 8 für R6
- o, p, q, r und y sind jeweils 19 Wiederholungseinheiten, 0 Wiederholungseinheiten, 1 Wiederholungseinheit, 0 Wiederholungseinheiten und 0 Wiederholungseinheiten und
- die Anzahl der festgelegten Ladungen beträgt 1.

3. Fluoriertes Polyelektrolytacrylcopolymer nach Anspruch 1 oder 2, wobei das Gegen-Ion Z aus der Gruppe ausgewählt ist, die Gegen-Ionen von Natrium (Na⁺), Kalium (K⁺) und Ammonium (NH₄⁺) umfasst.

4. Fluoriertes Polyelektrolytacrylcopolymer gemäß einem der vorhergehenden Ansprüche, wobei der Atomprozentsatz von Fluor (F) zwischen 15% und 45% liegt.

5. Fluoriertes Polyelektrolytakrylcopolymer nach Anspruch 4, wobei das Atomprozentsatz Fluor (F) 30% beträgt.

6. 5. Fluoriertes Polyelektrolytakrylcopolymer nach einem der vorhergehenden Ansprüche, wobei die chemische Struktur des Copolymers alternative, statistische und sequenzierte Verteilungen von fluorierten aliphatischen Ketten umfasst.

7. Relaiszusammensetzung eines Mittels umfassend ein Polyelektrolytakrylcopolymer der Formel (I) nach einem der vorhergehenden Ansprüche 1 bis 5, das in Wasser dispergiert ist, wobei das molare Verhältnis Copolymer/Wasser im Bereich von 1/10000 bis 5/10000 liegt.

8. Relaiszusammensetzung eines Mittels nach Anspruch 7, umfassend das Polyelektrolytakrylcopolymer der Formel (I), wobei das molare Verhältnis Copolymer/Wasser 3/10.000 beträgt.

9. Verfahren zum Erhalten eines Polyelektrolytakrylcopolymers zur Herstellung von Relaiszusammensetzungen eines Mittels gemäß der folgenden Formel (I) : 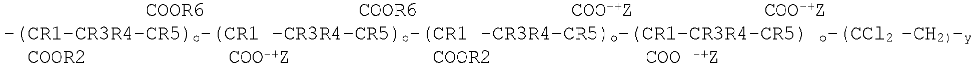 durch Umsetzen eines generischen fluorierten Acrylcopolymers gemäß der folgenden Formel (II): 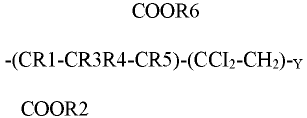 mit einer wässrigen Basislösung, die Z-Gegen-Ionen freisetzt,
wobei:
- Rl, R2, R3, R4 und R5 sind Alkylketten der generischen Formel -CₙH₂ₙ₊₁ mit 0 ≤ n ≤ 22,
- R6 ist eine fluorierte Kette der generischen Formel -CₙHₙ-CₘF₂ₘ₊₁ mit 0 ≤ n ≤ 4 und 0 ≤ m ≤ 12,
- o, p, q, r und y sind der Polymerisationsgrad jeder einzelnen Wiederholungseinheit des Copolymers der Formel (I) im Bereich von 10 Wiederholungseinheiten bis 30 Wiederholungseinheiten, von 0 Wiederholungseinheiten bis 5 Wiederholungseinheiten, von 0 Wiederholungseinheiten bis 5 Wiederholungseinheiten, von 0 Wiederholungseinheiten bis 1 Wiederholungseinheit und von 0 Wiederholungseinheiten bis 10 Wiederholungseinheiten, und
- x ist der Polymerisationsgrad des generischen Copolymers der Formel (II) im Bereich von 10 Wiederholungseinheiten bis 51 Wiederholungseinheiten;
wobei die Reaktion erzeugt eine festgelegte Anzahl von Ladungen auf dem Backbone des Copolymers der Formel (I) von 1 bis 12.

10. Verfahren nach Anspruch 9 , wobei:
- n ist 0 oder 1 für R1, R3, R4 und R5,
- n ist 6 oder 8 für R2,
- n ist 2 und m ist 6 oder 8 für R6,
- o + p + q + r = x,
- o, p, q, r und y sind jeweils 19 Wiederholungseinheiten, 0 Wiederholungseinheiten, 1 Wiederholungseinheit, 0 Wiederholungseinheiten und 0 Wiederholungseinheiten,
- x ist 20 sich wiederholende Einheiten und
- die Anzahl der festgelegten Ladungen beträgt 1.

11. Verfahren nach Anspruch 9 oder 10, wobei der Grund der wässrigen Basislösung ausgewählt ist aus der Gruppe bestehend aus Natriumhydroxid (NaOH), Kaliumhydroxid (KOH) und Ammoniumhydroxid (NH)₄OH).

12. Verfahren zur Herstellung einer Relaiszusammensetzung eines Mittel für die Vulkanisation von natürlichen oder synthetischen Gummi, umfassend die folgenden Schritte:
- Ausführen eines generischen fluorierten Acrylcopolymer mit der folgenden Formel (II) 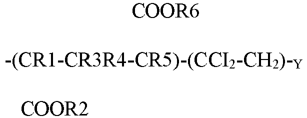 wobei:
- Rl, R2, R3, R4 und R5 sind Alkylketten mit einer generischen Formel -CₙH₂ₙ₊₁ mit 0 ≤ n ≤ 22,
- R6 ist eine fluorierte Kette der generischen Formel -CₙH₂ₙ-CₘF₂ₘ₊₁ mit 0 ≤ n ≤ 4 und 0 ≤ m ≤ 12, und
- x ist der Polymerisationsgrad des generischen Copolymers der Formel (II) im Bereich von 10 Wiederholungseinheiten bis 51 Wiederholungseinheiten (Schritt 100);
- Verdünnen des generischen Copolymers der Formel (II) mit Wasser auf einen Wert im Bereich von 0,1 Gew.-% bis 5,0 Gew.-% (Schritt 101);
- Zugeben einer wässrigen Basislösung unter Freisetzung von Z-Gegen-Ionen zur wässrigen Dispersion des generischen Copolymers der Formel (II), wodurch die folgende nicht reversible Verseifungsreaktion zwischen den Estergruppen des perfluorierten Acrylcopolymers und den Basismolekülen ausgelöst wird: 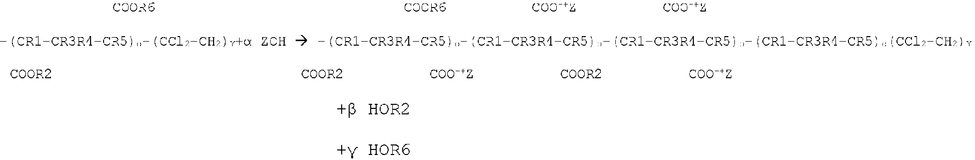 wobei:
- R1, R2, R3, R4, R5, R6 und x sind die gleichen wie oben definiert,
- o, p, q, r und y ist der Polymerisationsgrad von jeder einzelnen verschiedenen Wiederholungseinheit von dem Copolymer der Formel (I) im Bereich jeweils von 10 Wiederholungseinheiten bis zu 30 Wiederholungseinheiten, von 0 Wiederholungseinheiten bis 5 Wiederholungseinheiten, von 0 Wiederholungseinheiten bis 5 Wiederholungseinheiten, von 0 Wiederholungseinheiten bis 1 Wiederholungseinheit und von 0 Wiederholungseinheiten bis 10 Wiederholungseinheiten;
- α ist die anfängliche Anzahl der zugesetzten Mols ZOH,
- β und γ sind die Anzahl der Mole von HOR 2 und HOR6, die nach der Reaktion erzeugt werden, wobei die Summe von β und γ ist α (α=β+γ), wobei bei diesem Schritt ein fluoriertes Polyelektrolytacrylcopolymer mit der folgenden Formel (I) erzeugt wird: 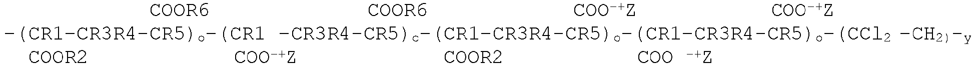 während der Produktion, deren Backbone eine festgelegte Anzahl von Ladungen im Bereich von 1 bis 12 (Schritt 102) aufweist.

13. Verfahren nach Anspruch 1 2 , wobei:
- n ist 0 oder 1 für R1, R3, R4 und R5,
- n ist 6 oder 8 für R2,
- n ist 2 und m ist 6 oder 8 für R6,
- o + p + q + r = x,
- o, p, q, r und y sind jeweils 19 Wiederholungseinheiten, 0 Wiederholungseinheiten, 1 Wiederholungseinheit, 0 Wiederholungseinheiten und 0 Wiederholungseinheiten,
- x ist 20 sich wiederholende Einheiten und
- die Anzahl der festgelegten Ladungen beträgt 1.

14. Verfahren nach Anspruch 12 oder 13, wobei die Basis der wässrigen Basislösung aus der Gruppe ausgewählt ist, die aus Natriumhydroxid (NaOH), Kalium ydroxyde (KOH) und Ammoniumhydroxid (NH₄OH) besteht.

15. Verfahren nach einem der vorhergehenden Ansprüche 12 bis 14, wobei das generische Copolymer der Formel (II) mit Wasser auf einen Wert von 1,0 Gew.- % verdünnt wird (Schritt 101) und dann mit der wässrigen Basislösung mit einer Konzentration im Bereich von 0,1 mol/L bis 5,0 mol/L gemischt wird.

16. Verfahren nach Anspruch 15, wobei das Copolymer der generischen Formel (II) mit Wasser mit einem Wert von 0,1 Gew.-% verdünnt wird und mit einer wässrigen Basislösung mit einer Konzentration von 1,0 mol/L.

17. Verfahren nach Anspruch 15, wobei das generische Copolymer der Formel (II) mit entionisiertem Wasser verdünnt und dann mit einer wässrigen Lösung von NaOH gemischt wird.

18. Verfahren zur Herstellung einer Relaiszusammensetzung eines Mittels zum Vulkanisieren von Gummi nach den Ansprüchen 7 oder 8, oder hergestellt nach einem Verfahren nach einem der vorhergehenden Ansprüchen 12 bis 17, umfassend die folgenden Schritte:
- Bereitstellen einer Relaiszusammensetzung eines Mittels, umfassend ein fluoriertes wässriges Polyelektrolytkopolymer mit der Formel (I) mit einer festgelegten Anzahl von Ladungen auf seinem Backbone von 1 bis 12 (Schritt 200);
- Bereitstellen eines Fahrzeugreifens aus Gummi Schritt 201) ;
- Sprühen der Relaiszusammensetzung des Mittels auf der Oberfläche der Form (Schritt 202);
- Sprühen der Relaiszusammensetzung des Mittels auf der Oberfläche eines expandierbaren Blase (Schritt 203);
- Einsetzen eines ungeformten Fahrzeugreifens aus Gummi in die Form (Schritt 204);
- Drücken des nicht geformten Fahrzeugreifens aus Gummi nach außen gegen die Form mittels der expandierbaren Blase (Schritt 205);
- Vulkanisieren des Fahrzeugreifens aus Gummi um die Gestaltung der Lauffläche des Reifens und die Konfiguration der Seitenwände (Schritt 206) zu definieren;
- Öffnen die Form (Schritt 207),
- Zusammenklappen der expandierbaren Blase durch Entfernen des Innendrucks (Schritt 208); und
- Entfernen des geformtes Fahrzeugreifens aus Gummi aus der Form (Schritt 209).

19. Verfahren nach Anspruch 18, wobei das Gummi ist ein Naturgummi oder ein synthetisches Gummi oder Verbundwerkstoffe desselben.

20. Verfahren nach Anspruch 18 oder 19, wobei der Vulkanisationsschritt (Schritt 205) bei erhöhten Drücken um 2,0×10⁶_{Pa} und bei erhöhten Temperaturen bis zu 200°C für einen verlängerten Zeitraum von 10 bis 60 Minuten erfolgt.

21. Verfahren nach Anspruch 18 oder 19 oder 20, wobei die durchschnittliche Adhäsionskraft zwischen der Form und dem Gummi kleiner oder gleich 5 N ist und die durchschnittliche Adhäsionskraft zwischen dem Gummi und der Blase etwa 0 N beträgt (wobei die durchschnittliche Adhäsionskraft gemäß der Definition im experimentellen Teil bestimmt wird).

## Revendications

1. Copolymère acrylique fluoré polyélectrolyte apte à produire une composition de relais d'un agent pour la vulcanisation d'une gomme naturelle ou synthétique, avec la formule (I) suivante: 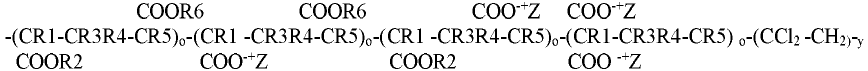 où:
- Z est un contre-ion
- R1, R2, R3, R4 et R5 sont des chaînes alkyle avec une formule générique de : -CₙH₂ₙ₊₁ avec 0 ≤ n ≤ 22
- R6 est une chaîne fluorée de formule générique -CₙH₂ₙ -CₘF₂ₘ₊₁ avec 0 ≤ n ≤ 4 et 0 ≤ m ≤12
- o, p, q, r et y sont le degré de polymérisation de chaque unité répétitive unique différente du copolymère de formule (I) allant respectivement de 10 unités répétitives à 30 unités répétitives, de 0 unités répétitives à 5 unités répétitives, de 0 unités répétitives à 5 unités répétitives, de 0 unités répétitives à 1 unité répétitive, et de 0 unités répétitives à 10 unités répétitives,
ledit copolymère de formule (I) ayant un nombre de charges dans son backbone allant de 1 à 12, afin d'améliorer les propriétés non collantes et de lubrification d'une correspondante dispersion d'eau du copolymère acrylique fluoré correspondant vers la gomme sur des différents matériaux en condition de pression de vulcanisation et de température.

2. Copolymère acrylique fluoré polyélectrolyte selon la revendication 1, dans lequel:
- n est 0 ou 1 pour R1, R3, R4 et R5
- n est 6 ou 8 pour R2
- n est 2 et m est 6 ou 8 pour R6
- o, p, q, r et y sont respectivement 19 unités répétitives, 0 unités répétitives, 1 unité répétitive, 0 unités répétitives et 0 unités répétitives, et
- le nombre de charges réglé est 1.

3. Copolymère acrylique fluoré polyélectrolyte selon la revendication 1 ou 2, dans lequel ledit contre-ion Z est choisi dans le groupe comprenant les contre-ions de sodium (Na⁺), potassium (K⁺) et ammonium (NH₄⁺) .

4. Copolymère acrylique fluoré polyélectrolyte selon l'une quelconque des revendications précédentes, dans lequel le pourcentage atomique de fluor (F) est compris entre 15% et 45%.

5. Copolymère acrylique fluoré polyélectrolyte selon la revendication 4, dans lequel le pourcentage atomique de fluor (F) est de 30%.

6. Copolymère acrylique fluoré polyélectrolyte selon l'une quelconque des revendications précédentes, dans lequel la structure chimique du copolymère comprend des distributions alternatives, aléatoires et séquencées de chaînes fluorées et aliphatiques.

7. Composition avec relais d'agent comprenant un copolymère acrylique fluoré polyélectrolyte de formule (I) selon l'une quelconque des revendications 1 à 5 dispersé dans l'eau, dans laquelle le rapport molaire copolymère/eau varie de 1/10000 à 5/10000.

8. Composition avec relais d'agent selon la revendication 7, comprenant le copolymère acrylique fluoré polyélectrolyte de la formule (I), dans laquelle le rapport molaire copolymère/eau est de 3/10000.

9. Procédé d'obtention d'un copolymère acrylique fluoré polyélectrolyte pour produire des compositions avec relais d'agent selon la formule suivante (I) : 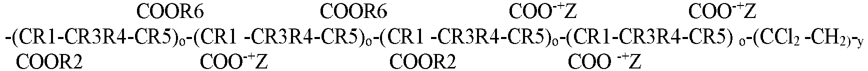 en faisant réagir un copolymère acrylique fluoré générique selon formule (II) suivante: 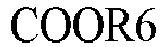 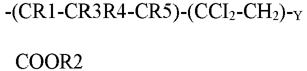 avec une solution de base aqueuse libérant des contre-ions Z,
dans lequel:
- R1, R2, R3, R4 et R5 sont des chaînes alkyles de formule générique -CₙH₂ₙ₊₁ avec 0 ≤ n ≤22,
- R6 est une chaîne fluorée de formule générique -CₙH₂ₙ-CₘF₂ₘ₊₁ avec 0 ≤n ≤4 et 0 ≤ m ≤12,
- o, p, q, r et y sont le degré de polymérisation de chaque unité répétitive unique du copolymère de formule (I) allant respectivement de 10 unités répétitives à 30 unités répétitives, de 0 unités répétitives à 5 unités répétitives, de 0 unités répétitives à 5 unités répétitives, de 0 unités répétitives à 1 unité répétitive et de 0 unités répétitives à 10 unités répétitives, et
- x est le degré de polymérisation du copolymère générique de formule (II) allant de 10 unités répétitives à 51 unités répétitives,
ladite réaction générant un nombre réglé de charges sur le backbone du copolymère de formule (I), de 1 à 12.

10. Procédé selon la revendication 9, dans lequel:
- n est 0 ou 1 pour R1, R3, R4 et R5,
- n est 6 ou 8 pour R2,
- n est 2 et m est 6 ou 8 pour R6,
- o + p + q + r = x,
- o, p, q, r et y sont respectivement 19 unités répétitives, 0 unités répétitives, 1 unité répétitive, 0 unités répétitives et 0 unités répétitives,
- x est 20 unités répétitives, et
- le nombre de charges réglé est 1.

11. Procédé selon la revendication 9 ou 10, dans lequel la base de la solution de base aqueuse est choisie dans le groupe comprenant l'hydroxyde de sodium (NaOH), l'hydroxyde de potassium (KOH) et l'hydroxyde d'ammonium (NH₄OH).

12. Procédé de production d'une composition de relais d'agent pour la vulcanisation d'une gomme naturelle ou synthétique comprenant les étapes suivantes:
- fournir un copolymère acrylique fluoré générique présentant la formule suivante (II) 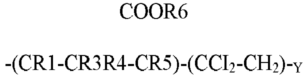 dans lequel:
- R1, R2, R3, R4 et R5 sont des chaînes alkyle avec une formule générique -CₙH₂ₙ₊₁ avec 0 ≤ n ≤ 22,
- R6 est une chaîne fluorée de formule générique -CₙH₂ₙ-CₘF₂ₘ₊₁ avec 0 ≤ n ≤ 4 et 0 ≤ m ≤ 12, et
- x est le degré de polymérisation du copolymère générique de formule (II) allant de 10 unités répétitives à 51 unités répétitives (étape 100);
- diluer le copolymère générique de formule (II) avec de l'eau à une valeur allant de 0,1% en poids à 5,0% en poids, (étape 101);
- ajouter une solution de base aqueuse libérant des contre-ions Z à la dispersion aqueuse du copolymère générique de formule (II), provoquant ainsi la réaction de saponification non réversible suivante entre les groupes ester du copolymère acrylique perfluoré et les molécules de base: 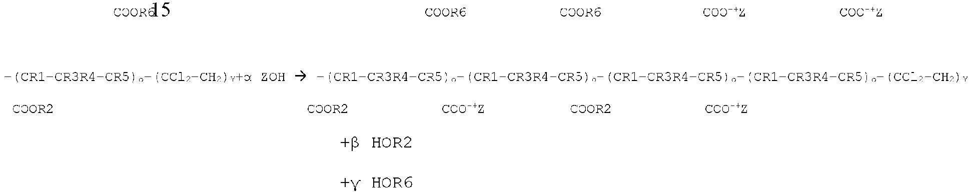 dans lequel:
- R1, R2, R3, R4, R5, R6 et x sont les mêmes que définis précédemment,
- o, p, q, r et y sont le degré de polymérisation de chaque unité répétitive différente unique du copolymère de formule (I) allant, respectivement, de 10 unités répétitives à 30 unités répétitives, de 0 unités répétitives à 5 unités répétitives, de 0 unités répétitives à 5 unités répétitives, de 0 unités répétitives à 1 unité répétitive, et de 0 unités répétitives à 10 unités répétitives,
- α est le nombre initial de moles de ZOH ajoutées,
- β et γ sont le nombre de moles de HOR2 et HOR6, respectivement, produites après réaction, la somme de β et γ étant α (α = β + γ), lors de cette étape un copolymère acrylique fluoré polyélectrolyte ayant la formule suivante (I): 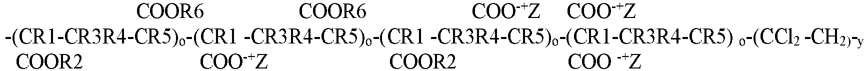 en cours de production, qui a un nombre réglé de charges sur son backbone dorsale allant de 1 à 12 (étape 102).

13. Procédé selon la revendication 12, dans lequel:
- n est 0 ou 1 pour R1, R3, R4 et R5,
- n est 6 ou 8 pour R2,
- n est 2 et m est 6 ou 8 pour R6,
- o + p + q + r = x,
- o, p, q, r et y sont respectivement 19 unités répétitives, 0 unités répétitives, 1 unité répétitive, 0 unités répétitives et 0 unités répétitives,
- x est 20 unités répétitives, et
- le nombre de charges réglé est 1.

14. Procédé selon la revendication 12 ou 13, dans lequel la base de la solution de base aqueuse est choisie dans le groupe comprenant l'hydroxyde de sodium (NaOH), l'hydroxyde de potassium (KOH) et l'hydroxyde d'ammonium (NHOH).

15. Procédé selon l'une quelconque des précédentes revendications de 12 à 14, dans lequel le copolymère générique de formule (II) est dilué avec de l'eau à une valeur de 1,0% en poids (étape 101), puis mélangé à la solution de base aqueuse ayant une concentration allant de 0,1 mol/L à 5,0 mol/L.

16. Procédé selon la revendication 15, dans lequel le copolymère générique de formule (II) est dilué avec de l'eau avec une valeur de 0,1% en poids et est mélangé avec une solution de base aqueuse avec une concentration de 1,0 mol/L.

17. Procédé selon la revendication 15, dans lequel le copolymère générique de formule (II) est dilué avec de l'eau désionisée et puis mélangé avec une solution aqueuse de NaOH.

18. Procédé d'utilisation d'une composition de relais d'agent en gomme vulcanisée selon les revendications 7 ou 8 ou produit par un procédé selon l'une quelconque des revendications précédentes de 12 à 17 comprenant les étapes suivantes:
- fournir une composition de relais d'agent comprenant un copolymère acrylique fluoré polyélectrolyte ayant la formule (I) avec un nombre réglé de charges sur son backbone allant de 1 à 12 (étape 200);
- fournir un moule pour un pneu de véhicule pneumatique en gomme (étape 201);
- pulvériser la composition de relais d'agent sur la surface dudit moule (étape 202);
- pulvériser la composition de relais d'agent sur la surface d'une vessie expansible (étape 203);
- insérer un pneu de véhicule pneumatique en gomme non façonné dans le moule (étape 204);
- presser ledit pneu de véhicule pneumatique en gomme non façonné vers l'extérieur contre ledit moule au moyen de la vessie extensible (étape 205);
- vulcaniser ledit pneu de véhicule pneumatique en gomme pour définir le dessin de la bande de roulement du pneu et la configuration des parois latérales (étape 206);
- ouvrir le moule (étape 207);
- faire s'effondrer la vessie expansible en supprimant sa pression interne (étape 208); et
- retirer le pneu de véhicule pneumatique en gomme profilé du moule (étape 209).

19. Procédé selon la revendication 18, dans lequel ladite gomme est un caoutchouc naturel ou un caoutchouc synthétique ou leurs composites.

20. Procédé selon la revendication 18 ou 19, dans lequel l'étape de vulcanisation (étape 205) a lieu à des pressions élevées autour de 2,0^{∗}10⁶ Pa et à des températures élevées jusqu'à 200°C pendant une période de temps prolongée de 10 à 60 minutes.

21. Procédé selon la revendication 18 ou 19 ou 20, dans lequel la force d'adhésion moyenne entre le moule et la gomme est inférieure ou égale à 5 N et la force d'adhésion moyenne entre la gomme et la vessie est d'environ 0 N (dans lequel la force d'adhésion moyenne est déterminée selon ce qui est défini dans la partie expérimentale.
